# EUROPEAN PATENT APPLICATION

(11) **EP 4 403 353 A1**
(43) Date of publication of application: **24.07.2024**
(21) Application number: 23305068.1
(22) Date of filing: 20.01.2023
(51) Int. Cl.: B32B 7/12, B32B 27/40, B65D 85/00, C08G 18/10, C08G 18/12, C08G 18/30, C08G 18/32, C08G 18/42, C08G 18/48, C08G 18/76, C08G 18/78, C09J 175/06, C09J 175/08, C08L 75/04, C08L 75/06, C08L 75/08

(54) **MOISTURE CURE SOLVENT FREE LAMINATING ADHESIVE AND LAMINATES**

(71) Applicant: ARKEMA FRANCE, 92700 Colombes (FR)
(72) Inventor: LEE, Byoungchul, Dublin, 43017 (US); STEED, Jared, Dublin, 43017 (US); JOHNSON, Randy, Dublin, 43017 (US)
(74) Representative: Arkema Patent

(57) **Abstract**

The present disclosure relates to a SFLA composition comprising the reaction product of precursors, the precursors comprise (i) a crystallizable polyol having: (1) a melting point of at least about 30°C; and (2) an OH number of at least about 10 mg KOH/ g, and (ii) less than 10 wt% of a tackifier having a melting point or softening point of at least about 40°C. A viscosity of the adhesive comprises at least one of: (1) less than about 10,000 cP at 60°C, (2) less than about 5,000 cP at 75°C and (3) combinations thereof. Applications for the SFLA include the making of flexible packaging, wall coverings and other uses that include the lamination or bonding of one or more porous substrates.

## Description

### FIELD OF THE DISCLOSURE

The presently disclosed process(es), procedure(s), method(s), product(s), result(s), and/or concept(s) (collectively referred to hereinafter as the "present disclosure or invention") relates generally to a laminating adhesive composition for flexible packaging, wall coverings and other applications as may become apparent to those skilled in the art, a method of bonding a laminate with the composition and a method of preparing the composition thereof. The disclosure has particular application for porous substrates and as a moisture cure solvent free laminating adhesive ("SFLA"). The adhesive composition may be a one component ('1K") adhesive or a multi-component adhesive.

### BACKGROUND OF THE DISCLOSURE

The present invention relates to a SFLA composition for flexible packaging and other applications, a method of bonding a laminate with the composition, a method of preparing the adhesive composition thereof.

Conventional 1K SFLA are viscous liquids before curing which limits their use with porous substrates. One conventional embodiment relates to crystalline, isocyanate group-containing hot melt adhesives based on from 70-95% by weight of a prepolymer A based on polyester diols having a molecular weight of from 1500 to 10,000 and melting points of from 50° to 90° C. and diisocyanates in a ratio of isocyanate groups of the diisocyanate to the hydroxyl groups of the polyester diol of from 3:1 to 1.2:1 and from 5-30% by weight of a component B having a molecular weight of from 1,000 to 10,000 based on polyesters having melting points of from 60° to 150° C., in which component B contains at most 0.5 Zerewitinow active groups per molecule (US Patent 5162457).

Another prior art embodiment is US Patent 5472785, which discloses a seriation moisture curable hot melt composition comprising: (a) a first isocyanate-terminated polyurethane prepolymer that is the reaction product of a crystalline polyester polyol and a polyisocyanate; (b) a crystalline, reactive wax; and (c) optionally, a second isocyanate-terminated polyurethane prepolymer that is the reaction product of a polyisocyanate and a hydroxy-functional polymer that is different than the crystalline polyester polyol.

A third prior art embodiment is disclosed in US 2017/0204310, which discloses a 1K, atmospheric curing, polyurethane adhesive composition that includes a polyurethane prepolymer that includes a reaction product of a polyol component and an isocyanate component, the polyol component comprising an unsaturated fatty acid esterified polyol comprising a reaction product of a first polyol and at least one of an ethylenically unsaturated oil and an ethylenically unsaturated fatty acid, the first polyol comprising at least three hydroxyl groups, and a % NCO of from at least 4% by weight to no greater than 7% by weight based on the weight of the prepolymer, the adhesive composition exhibiting a viscosity of no greater than 15,000 centipoise at 60° C, and a T-peel value of greater than 40 grams per 25 millimeter in no greater than 4 hours, a method of making a laminate, and a laminate that includes a 1K, atmospheric curing, polyurethane adhesive composition.

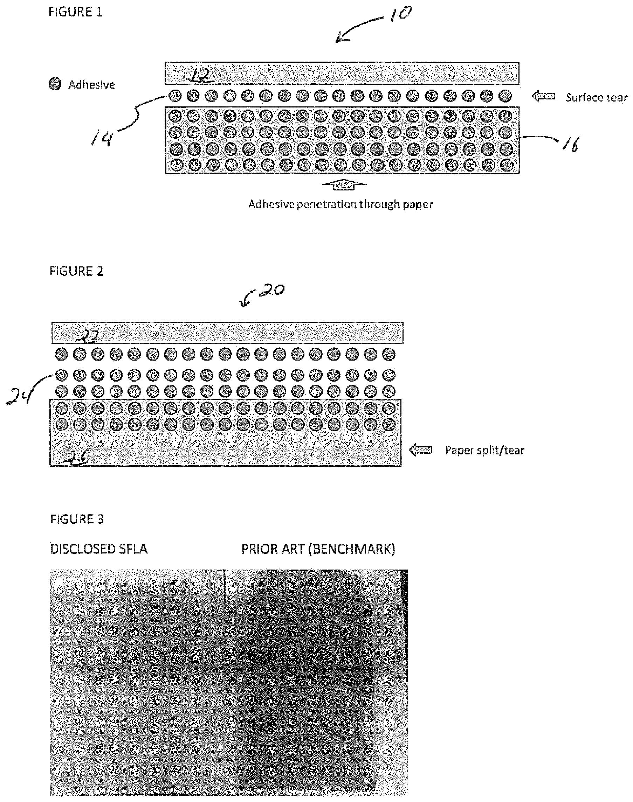

Figure 1 is a schematic view of the prior art. Illustrated in Figure 1 is an embodiment 10 which includes a substrate/film 12, an adhesive represented by dots 14 and a porous substrate 16. As illustrated, adhesive 14 has wicked into porous substrate 16. The illustrated wicking is known to cause adhesive failure between film 12 and substrate 16. Film 12 is known to separate from substrate 16.

Another short coming, as will be shown below, the prior art adhesive has a tendency to bleed through the surface of the substrate (in some embodiments the substrate may be a label) and interfere with the viewing of the content on the substrate. An example of the substrate may be a film.

Conventional 1K SFLA have exhibited a tendency for undesirable penetration/ wicking into porous substrates, adhesive failures and damage the ink coated film in flexible packaging. Blocking of wound laminated rolls is another drawback of such conventional adhesives.

Accordingly, it would be desirable to produce a laminating adhesive composition that does not exhibit undesirable wicking into the porous substrates, minimal to no adhesive failures and does not damage an ink coated substrate or other surface that is meant to be viewed or observed. The disclosed adhesive may include further advantages as disclosed below.

### BRIEF DESCRIPTION

These and other embodiments will become apparent in light of the following disclosure.

One embodiment of the present disclosure relates to a 1K moisture cure SFLA composition comprising the reaction product of precursors, the precursors comprise (i) a crystallizable polyol having: (1) a melting point of at least about 30°C; and (2) a hydroxyl ("OH") number of at least about 10 mg KOH/ g, and (ii) less than 10 wt% of a tackifier having a melting point or softening point of at least about 40°C. A viscosity of the adhesive comprises at least one of: (1) less than about 10,000 cP at 60°C, (2) less than about 5,000 cP at 75°C and (3) combinations thereof.

Another embodiment of the present disclosure relates to a laminate comprising first and second substrates and a cured version of an adhesive composition sandwiched between the first and second substrates. The adhesive composition may be a moisture cure SFLA composition comprising the reaction product of precursors, the precursors comprise (i) a crystallizable polyol having: (1) a melting point of at least about 30°C; and (2) a hydroxyl ("OH") number of at least about 10 mg KOH/ g, and (ii) less than 10 wt% of a tackifier having a melting point or softening point of at least about 40°C. Prior to cure the composition has at least one of the following viscosities: (1) less than about 10,000 cP at 60°C, (2) less than about 5,000 cP at 75°C and (3) combinations thereof.

A particular embodiment of the present disclosure relates to a 1K moisture cure SFLA composition comprising the reaction product of precursors, the precursors comprise (i) a crystallizable polyol having: (1) a melting point of at least about 30°C; and (2) a hydroxyl ("OH") number of at least about 10 mg KOH/ g, (ii) less than 10 wt% of a tackifier having a melting point or softening point of at least about 40°C and (iii) a non-crystallizable polyol having a number average molecular weight of more than 3000 Daltons. A viscosity of the adhesive comprises at least one of: (1) less than about 10,000 cP at 60°C, (2) less than about 5,000 cP at 75°C and (3) combinations thereof.

An additional embodiment disclosed herein relates to a 1K moisture cure SFLA composition comprising the reaction product of precursors, the precursors comprise (i) a crystallizable polyol having: (1) a melting point of at least about 30°C; and (2) OH number of at least about 10 mg KOH/ g, and (ii) a tackifier having a melting point or softening point of at least about 40°C. The viscosity of the adhesive may comprise at least one of the following: (1) less than about 10,000 cP at 60°C, (2) less than about 5,000 cP at 75°C and (3) combinations thereof.

A further embodiment may include a laminate comprising first and second substrates and a cured version of an adhesive composition sandwiched between the two substrates. The adhesive composition may comprise the reaction product of precursors, the precursors comprise (i) a crystallizable polyol having: (1) a melting point of at least about 30°C; and (2) OH number of at least about 10 mg KOH/ g, and (ii) a tackifier having a melting point or softening point of at least about 40°C. Prior to cure the composition has at least one of the following viscosities: (1) less than about 10,000 cP at 60°C, (2) less than about 5,000 cP at 75°C and (3) combinations thereof.

The disclosure may also include an embodiment that relates to a 1K moisture cure SFLA composition which is the reaction product of a plurality of precursors, the precursors consist of (i) a crystallizable polyol having: (1) a melting point of at least about 30°C; and (2) a hydroxyl ("OH") number of at least about 10 mg KOH/ g, and (ii) less than 10 wt% of a tackifier having a melting point or softening point of at least about 40°C. A viscosity of the adhesive comprises at least one of: (1) less than about 10,000 cP at 60°C, (2) less than about 5,000 cP at 75°C and (3) combinations thereof.

Another alternative embodiment may include a 1K moisture cure SFLA composition which is the reaction product of a plurality of precursors, the precursors consist of (i) a crystallizable polyol having: (1) a melting point of at least about 30°C; and (2) a hydroxyl ("OH") number of at least about 10 mg KOH/ g, and (ii) less than 10 wt% of a tackifier having a melting point or softening point of at least about 40°C and at least one of the following (iii) a non-crystallizable polyol having a number average molecular weight of at least about 400 Daltons, (iv) an isocyanate containing compound and (v) combinations of (iii) and (iv). A viscosity of the adhesive comprises at least one of: (1) less than about 10,000 cP at 60°C, (2) less than about 5,000 cP at 75°C and (3) combinations thereof.

A further alternative embodiment may include a 1K moisture cure SFLA composition which is the reaction product of a plurality of precursors, the precursors consist of (i) a crystallizable polyol having: (1) a melting point of at least about 30°C; and (2) a hydroxyl ("OH") number of at least about 10 mg KOH/ g, and (ii) less than 10 wt% of a tackifier having a melting point or softening point of at least about 40°C and at least one of the following (iii) a non-crystallizable polyol having a number average molecular weight of more than 3000 Daltons, (iv) an isocyanate containing compound and (v) combinations of (iii) and (iv). A viscosity of the adhesive comprises at least one of: (1) less than about 10,000 cP at 60°C, (2) less than about 5,000 cP at 75°C and (3) combinations thereof.

Advantages of embodiments disclosed herein may include one or more of the following: (1) low viscosity thereby enabling easy application and cleaning; (2) faster cure speed at room temperature than competition; (3) hot room for application is not required; (4) superior migration performance; (5) improved thermal resistance than competition; (6) favorable failure mode; (7) room temperature cure; (8) fast bond strength development; (9) minimizing/ preventing blocking of laminated rolls ( (10) may be applied on porous substrates; (11) minimized undesirable wicking into a substrate, (12) minimized failures of substrates having an ink coating, (13) the SFLA has a low viscosity at application temperature and the viscosity quickly increases upon cooling, (14) a typical failure mode exhibited was in the substrate (AKA "fiber tear failure mode") and (15) minimized failures of substrates having an exterior ink coating.

### ASPECTS

In addition to the embodiments, in the Brief Description, the Detailed Description and the Claims, the disclosure may further include other aspects such as those enumerated below.

A first aspect includes solvent free moisture cure laminating adhesive composition may comprise the reaction product of precursors, the precursors comprise (i) a crystallizable polyol having: (1) a melting point of at least about 30°C and (2) a hydroxyl ("OH") number of at least 10 mg KOH/ g and (ii) up to 50 wt% of a tackifier having a melting or softening point of at least about 40°C. Wherein a viscosity of the adhesive composition comprises at least one of: less than about 10,000 cP at 60°C, less than about 5,000 cP at 75°C and combinations thereof.

In a second aspect, the moisture cure adhesive composition of aspect 1 wherein the precursors further comprise a non-crystallizable polyol having a number average molecular weight of at least about 400 Daltons.

In a third aspect the moisture cure adhesive composition of aspect 2 wherein the number average molecular weight comprises no more than about 10,000 Daltons.

In a fourth aspect the moisture cure adhesive of anyone of aspects 2 or 3 wherein the non-crystallizable polyol comprises at least one of a polyether polyol, polyester polyol, co-polyester polyol and combinations thereof.

In a fifth aspect, the moisture cure adhesive of anyone of the preceding aspects wherein the crystallizable polyol comprises a polyester polyol.

In a sixth aspect, the moisture cure adhesive of any one of aspects 1-5 wherein the precursors further comprise an MDI compound.

In a seventh aspect, the moisture cure adhesive of the sixth aspect wherein the MDI compound comprises a 4, 4' MDI compound. Optionally the aspect may further include either or both of 2, 2' MDI and 2, 4' MDI.

In an eighth aspect, the moisture cure adhesive of aspect 7 wherein the 4, 4' MDI compound comprises at least one of an allophanate MDI, an uretonimine, a polymeric MDI and combinations thereof.

In a ninth aspect, the moisture cure adhesive of any one of aspects 7 or 8 further comprising an aliphatic isocyanate, such as but not limited to HDI, HDI trimer and/ or IPDI.

In a tenth aspect, the moisture cure adhesive of anyone of aspects 1-5 the precursors may further comprise an isocyanate containing compound selected from: hexamethylene diisocyanate, toluene diisocyanate (TDI), diphenylmethane diisocyanate (MDI), m- and p-phenylene diisocyanates, bitolylene diisocyanate, cyclohexane diisocyanate (CHDI), bis-(isocyanatomethyl)cyclohexane (H6XDI), dicyclohexylmethane diisocyanate (H12MDI), dimer acid diisocyanate (DDI), trimethyl hexamethylene diisocyanate, lysine diisocyanate and its methyl ester, isophorone diisocyanate, methyl cyclohexane diisocyanate, 1,5-napthalene diisocyanate, xylene diisocyanate and methyl derivatives thereof, polymethylene polyphenyl isocyanates, chlorophenylene-2,4-diisocyanate, polyphenylene diisocyanates, isophorone diisocyanate (IPDI), hydrogenated methylene diphenyl isocyanate (HMDI), tetramethyl xylene diisocyanate (TMXDI), hexamethylene diisocyanate (HDI), trimer of IPDI, trimer of HDI, a biuret of HDI, and combinations thereof.

In an eleventh aspect, the moisture cure adhesive of anyone of the preceding aspects wherein the adhesive comprises an NCO% of less than about 10%.

In a twelfth aspect, the moisture cure adhesive of anyone of the preceding aspects wherein the composition comprises no more than a nominal amount of the tackifier.

In a thirteenth aspect, the moisture cure adhesive of anyone of the preceding aspects wherein the temperature of the melting point or softening point of the tackifier comprises at least about 50°C.

In a fourteenth aspect, the moisture cure adhesive of any one of the preceding aspects wherein the temperature of the melting point or softening point of the tackifier comprises no more than about 100°C.

In a fifteenth aspect, the moisture cure adhesive of any one of the preceding aspects wherein the melting point or softening point of the tackifier comprises at least about 65°C.

A sixteenth aspect includes a laminate comprising first and second substrates and a cured version of the adhesive composition of anyone of the preceding aspects sandwiched between the first and second substrates.

A seventeenth aspect includes the laminate of aspect 16 wherein at least one of the first and second substrates comprises a porous substrate selected from the group of: paper, foil, woven fabric, non-woven fabric and combinations thereof.

An eighteenth aspect includes the laminate of either aspect 16 or 17 wherein at least one of the first and second substrates does not comprise polyethylene terephthalate (PET) or bi-axially oriented polypropylene (BOPP).

### BRIEF DESCRIPTION OF THE FIGURES

Figures 1 is a schematic view of the wicking of the prior art adhesive into a substrate.
Figure 2 is a schematic view of the wicking of an embodiment of the adhesive disclosed herein into a substrate.
Figure 3 is an image of the bleed through of a substrate of the disclosed adhesive composition (left side) and a prior art composition (right side).
Figure 4 is a chart of the viscosity as a function of temperature of a control (benchmark) and embodiments disclosed herein (Examples 1 and 2).

### DETAILED DESCRIPTION

At least an exemplary embodiment of the invention will now be described.

Before explaining at least one embodiment of the present disclosure in detail, it is to be understood that the present disclosure is not limited in its application to the details of construction and the arrangement of the components or steps or methodologies set forth in the following description or illustrated in the drawings. The present disclosure is capable of other embodiments or of being practiced or carried out in various ways. Also, it is to be understood that the phraseology and terminology employed herein is for the purpose of description and should not be regarded as limiting.

Unless otherwise defined herein, technical terms used in connection with the present disclosure shall have the meanings that are commonly understood by those of ordinary skill in the art. Further, unless otherwise required by context, singular terms shall include pluralities and plural terms shall include the singular.

All patents, published patent applications, and non-patent publications mentioned in the specification are indicative of the level of skill of those skilled in the art to which the present disclosure pertains. All patents, published patent applications, and non-patent publications referenced in any portion of this application are herein expressly incorporated by reference in their entirety to the same extent as if each individual patent or publication was specifically and individually indicated to be incorporated by reference.

All of the articles and/or methods disclosed herein can be made and executed without undue experimentation in light of the present disclosure. While the articles and methods of the present disclosure have been described in terms of preferred embodiments, it will be apparent to those of ordinary skill in the art that variations can be applied to the articles and/or methods and in the steps or in the sequence of steps of the method(s) described herein without departing from the concept, spirit and scope of the present disclosure. All such similar substitutes and modifications apparent to those skilled in the art are deemed to be within the spirit, scope and concept of the present disclosure.

As utilized in accordance with the present disclosure, the following terms, unless otherwise indicated, shall be understood to have the following meanings.

The use of the word "a" or "an" when used in conjunction with the term "comprising" can mean "one," but it is also consistent with the meaning of "one or more," "at least one," and "one or more than one." The use of the term "or" is used to mean "and/or" unless explicitly indicated to refer to alternatives only if the alternatives are mutually exclusive, although the disclosure supports a definition that refers to only alternatives and "and/or." Throughout this application, the term "about" is used to indicate that a value includes the inherent variation of error for the quantifying device, the method(s) being employed to determine the value, or the variation that exists among the study subjects.

References herein to "one embodiment," or "one aspect" or "one version" or "one objective" or "another embodiment," or "another aspect" or "another version" or "another objective" of the invention can include one or more of such embodiment, aspect, version or objective, unless the context clearly dictates otherwise.

The term "at least one" refers to one as well as any quantity more than one, including but not limited to, 1, 2, 3, 4, 5, 10, 15, 20, 30, 40, 50, 100, etc. The term "at least one" can extend up to 100 or 1000 or more depending on the term to which it is attached.

All percentages, parts, proportions, and ratios as used herein are by weight of the total composition, unless otherwise specified. All such weights as they pertain to listed ingredients are based on the active level and therefore do not include solvents or by-products that can be included in commercially available materials, unless otherwise specified.

All references to singular characteristics or limitations of the present invention shall include the corresponding plural characteristics or limitations, and vice-versa, unless otherwise specified or clearly implied to the contrary by the context in which the reference is made.

Numerical ranges as used herein are intended to include every number and subset of numbers contained within that range, whether specifically disclosed or not. Further, these numerical ranges should be construed as providing support for a claim directed to any number or subset of numbers in that range.

As used herein, the words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps. The terms "or combinations thereof" and "and/or combinations thereof" as used herein refer to all permutations and combinations of the listed items preceding the term. For example, "A, B, C, or combinations thereof" is intended to include at least one of: A, B, C, AB, AC, BC, or ABC and, if order is important in a particular context, also BA, CA, CB, CBA, BCA, ACB, BAC, or CAB. Continuing with this example, expressly included are combinations that contain repeats of one or more items or terms, such as BB, AAA, AAB, BBC, AAABCCCC, CBBAAA, CABABB, and so forth. The skilled artisan will understand that typically there is no limit on the number of items or terms in any combination, unless otherwise apparent from the context. As used herein the words "consisting of" are indicative of closed-end claims or embodiments in which additional unrecited elements or method steps are excluded.

For purposes of the following detailed description, other than in any operating examples, or where otherwise indicated, numbers that express, for example, quantities of ingredients used in the specification and claims are to be understood as being modified in all instances by the term "about". The numerical parameters set forth in the specification and attached claims are approximations that can vary depending upon the desired properties to be obtained in carrying out the invention.

The term "or combinations thereof", "and combinations thereof", and "combinations thereof" as used herein refers to all permutations and combinations of the listed items preceding the term.

The term "about" refers to a range of values ± 10% of a specified value. For example, the phrase "about 200" includes ± 10% of 200, or from 180 to 220.

The term "polymerization" or "polymerizing" refers to methods for chemically reacting monomer compounds to form polymer chains. The polymer chain can be alternating, blocked, or random. The type of polymerization method can be selected from a wide variety of methods and include the following non-limiting examples: poly condensation, step growth polymerization, and free radical polymerization.

The term "polymer" refers to any large molecule, which includes macromolecules. The term "polymer" refers to a large molecule comprising one or more types of monomer residues (repeating units) connected by covalent chemical bonds. Non-limiting examples of polymers include homopolymers, and non-homopolymers such as copolymers, terpolymers, tetrapolymers and the higher analogues.

The term "monomer" refers to a small molecule that chemically bonds during polymerization to one or more monomers of the same or different kind to form a polymer.

The term "copolymer" herein refers to a polymer prepared from more than one monomer.

Unless indicated otherwise, viscosities disclosed herein are at 25ºC ±5ºC.

An embodiment of the adhesive disclosed herein can be a moisture cure solvent free laminating adhesive ("SFLA") comprising the reaction product of the following precursors (i) a crystallizable polyol having (1) a melting point of at least about 30°C; and (2) a hydroxyl ("OH") number of at least about 10 mg KOH/ g and (ii) less than 10 wt% of a tackifier having a melting point or softening point of at least about 40°C. A viscosity of the adhesive comprises at least one of less than about 10,000 cP at 60°C, less than about 5,000 cP at 75°C and combinations thereof. The adhesive may be a 1K adhesive.

The OH number may be determined by ASTM D4274 Standard Test Methods for Testing Polyurethane Raw Materials: Determination of Hydroxyl Numbers of Polyols. How to determine the OH number is not limited to the aforementioned ASTM standard. Types of titration methods may also be suitable.

The softening point may be determined by Ring and Ball Softening Point commonly referred to as ASTM E 28 or the Drop Method. Mettler Toledo offers various types of equipment that may be used to practice the Drop Method. Examples of two (2) apparatus are the Drop Point System DP70 or Drop Point System DP90.

The viscosities listed herein may be determined using a Brookfield cone and plate viscometer using a #4 spindle. The shear rate was 20 rpm unless otherwise stated.

Differential scanning calorimetry (DSC), a thermoanalytical technique, which is known to be used to determine thermal transitions, such as the glass transition temperature (*T*_{g}), crystallization temperature (*T*_{c}), and melting temperature (*T*ₘ) may be used to determine if a material is crystallizable. An example of suitable DSC for purposes disclosed herein includes a TA Instruments Discovery DSC 2500 (SN DSC2A-00538).

A suitable example of the crystallizable polyol is a polyester polyol. One example of a suitable polyol is an aliphatic polyester polyol. Non-limiting specific examples of suitable polyols include: polyhexamethylene adipate (1,6-hexanediol-adipic acid polymer) and polyhexamethylene dodecanedioate (1,6-hexanediol-dodecanedioic acid polymer). They may be used together or in combination.

The crystallizable polyol may account for up to 50 wt% of the precursors. Other suitable concentrations may include up to 35 wt%, up to 25 wt%, up to 20 wt%, at least about 5 wt%, at least 10 wt% or at least 15 wt%.

Regarding suitable hydroxyl numbers (OH number), preferably the OH number may comprise from about 10 to about 150 mg KOH/ g, with specific embodiments of at least about 10, at least about 15, at least about 25, at least about 50 and at least about 100.

In a specific embodiment, the moisture cure adhesive comprises no more than a nominal amount of the tackifier. A nominal amount of tackifier may include less than about 1wt%, no more than about 0.5 wt%, no more than trace amounts and 0 wt% (may also be stated as "tackifier free").

In another specific embodiment, the moisture cure adhesive comprises at least 1 wt% of the tackifier up to less than 10 wt% of the tackifier. Exemplary amounts of the tackifier may range from at least 1 wt% to less than 9.99 wt%, from 2 wt% to less than 9.9 wt%, from 3 wt% to less than 9.5 wt%, from 4 wt% to no more than 9 wt% and about 4 to about 5 wt%.

With respect to the melting point or softening point of the tackifier it may comprise at least about 50°C. In a further embodiment it may be at least about 65°C. In an even further preferred embodiment, it may be no more than about 100°C.

An embodiment of the SFLA may be substantially solvent free. Solvent free is used here in to no more than 10 wt% of solvent all the way to below a detectable amount. Specific examples may include less than 5 wt%, less than 1 wt%, and no more than trace amounts.

In a particular embodiment, the precursors of the adhesive composition may further include a non-crystallizable polyol having a number average molecular weight of at least about 400 Daltons. Preferably the number average molecular weight of the non-crystallizable polyol is no more than about 10,000 Daltons. Preferably, the number average molecular weight may comprise more than 3,000 Daltons. One particular embodiment comprises over 3,000 up to about 10,000 Daltons. Specific examples of number average molecular weight of the non-crystallizable polyol may range from any of the following: 1,000 to 8,000 Daltons, 2,000 to about 7,500 Daltons, more than 3,000 to up to 7,000 Daltons.

Examples of suitable non-crystallizable polyol may comprise at least one of a polyether polyol, polyester polyol, co-polyester polyol and combinations thereof.

Useful polyether polyols can be obtained from the polymerization of a cyclic oxide, e.g., ethylene oxide, propylene oxide, butylene oxide, and tetrahydrofuran, or by the addition of one or more such oxides to polyfunctional initiators having at least two active hydrogens including, e.g., water, polyhydric alcohols (e.g., ethylene glycol, propylene glycol, diethylene glycol, cyclohexane dimethanol, glycerol, trimethylol-propane, pentaerythritol and bisphenol A), ethylenediamine, propylenediamine, triethanolamine, and 1,2-propanedithiol. Particularly useful polyether polyols include, e.g., polyoxypropylene diols and triols, poly(oxyethylene-oxypropylene) diols and triols obtained by the simultaneous or sequential addition of ethylene oxide and propylene oxide to appropriate initiators, and polytetramethylene ether glycols obtained by the polymerization of tetrahydrofuran. Examples of preferred polyether polyols include a polyalkylene oxide, such as polypropylene oxide, poly(ethylene oxide) and ethylene oxide/propylene oxide copolymer. Polypropylene glycol is an example of a suitable polyol.

The polyester polyol may be selected from the group consisting of polyglycol dicarboxylates, polycaprolactone polyols and a combination thereof.

Useful polyester polyols may be prepared from the reaction product of polycarboxylic acids, their anhydrides, their esters or their halides, and a stoichiometric excess polyhydric alcohols. Suitable polycarboxylic acids include dicarboxylic acids and tricarboxylic acids including, e.g., aromatic dicarboxylic acids, anhydrides and esters thereof (e.g. terephthalic acid, isophthalic acid, dimethyl terephthalate, diethyl terephthalate, phthalic acid, phthalic anhydride, methyl-hexahydrophthalic acid, methyl- hexahydrophthalic anhydride, methyl-tetrahydrophthalic acid, methyl - tetrahydrophthalic anhydride, hexahydrophthalic acid, hexahydrophthalic anhydride, and tetrahydrophthalic acid), aliphatic dicarboxylic acids and anhydrides thereof (e.g. maleic acid, maleic anhydride, succinic acid, succinic anhydride, glutaric acid, glutaric anhydride, adipic acid, hexanoic acid, pimelic acid, suberic acid, azelaic acid, sebacic acid, chlorendic acid, 1,2,4-butane-tricarboxylic acid, decanedicarboxylic acid, octadecanedicarboxylic acid, dimeric acid, dimerized fatty acids, trimeric fatty acids, and fumaric acid), and alicyclic dicarboxylic acids (e.g. 1,3-cyclohexanedicarboxylic acid, and 1,4-cyclohexanedicarboxylic acid).

Examples of suitable polyols from which polyester polyols can be derived include aliphatic polyols, e.g., ethylene glycols, propane diols (e.g., 1,2-propanediol and 1,3-propanediol), butane diols (e.g., 1,3-butanediol, 1,4-butanediol), pentane diols (e.g., 1,5-pentanediol), 1,6-hexanediol, 1,8-octanediol, 1,10-decanediol, neopentyl glycol, diethylene glycol, triethylene glycol, tetraethylene glycol, polyethylene glycols, propylene glycol, polypropylene glycols (e.g., dipropylene glycol and tripropylene glycol), 1,4-cyclohexanedimethanol, 1,4-cyclohexanediol, dimer diols, bisphenol A, bisphenol F, hydrogenated bisphenol A, hydrogenated bisphenol F, glycerol, tetramethylene glycol, polytetramethylene glycol, 3-methyl-1,5-pentanediol, 1,9-nonanediol, 2-methyl-1,8-octanediol, trimethylolpropane, glycerin, pentaerythritol, sorbitol, glucose, and combinations thereof.

Precursors of the adhesive composition may also include an aromatic isocyanate compound such as but not limited to a diphenylmethane diisocyanate ("MDI") compound. In a particular example the MDI compound comprises a 4, 4' -diphenylmethane diisocyanate ("4, 4' MDI") compound. The isocyanate compound may further include 2, 2'-diphenylmethane diisocyanate ("2, 2' MDI") and/or 2, 4'-diphenylmethane diisocyanate ("2, 4' MDI"). Preferably the 4, 4' MDI compound is more than about 50wt% of the type of type of MDI included in the precursors. Other aromatic isocyanate compounds may include toluene diisocyanate (TDI), m- and p-phenylene diisocyanates, bitolylene diisocyanate, napthalene diisocyanate, xylene diisocyanate and methyl derivatives thereof, polymethylene polyphenyl isocyanates, chlorophenylene-2,4-diisocyanate, polyphenylene diisocyanates, tetramethyl xylene diisocyanate (TMXDI) and combinations thereof.

In specific examples the 4, 4' MDI compound may comprise at least one of an allophanate MDI, an uretonimine, a polymeric MDI and combinations thereof.

In examples of the MDI compound may include less than 10 wt% of 2, 2' MDI and 2, 4' MDI. More preferably less than 5 wt% of the 2, 2' MDI, further less than 1 wt% of the 2, 2' MDI.

In an alternative embodiment, the aromatic isocyanate compound comprises a 50/50 ratio of 4, 4' MDI and 2, 4' MDI.

In addition to the MDI, the precursors may include aliphatic isocyanates such as but not limited to hexamethylene diisocyanate ("HDI"), HDI trimer, isophorone diisocyanate ("IPDI") and combinations thereof.

In an alternate embodiment, the isocyanate containing compound may be a non-aromatic compound instead of an aromatic one. The non-aromatic isocyanate compound may comprise a isocyanate containing compound selected from: hexamethylene diisocyanate, cyclohexane diisocyanate (CHDI), bis-(isocyanatomethyl)cyclohexane (H6XDI), dicyclohexylmethane diisocyanate (H12MDI), dimer acid diisocyanate (DDI), trimethyl hexamethylene diisocyanate, lysine diisocyanate and its methyl ester, methyl cyclohexane diisocyanate, isophorone diisocyanate (IPDI), hydrogenated methylene diphenyl diisocyanate (HMDI), hexamethylene diisocyanate (HDI), a trimer of IPDI, trimer of HDI, a biuret of HDI, and combinations thereof.

If so desired, the precursors of the adhesive do not include a crystalline wax. Optionally, non-crystalline waxes may not be included in the precursors, also.

A typical observation of the adhesive disclosed herein is as the temperature decreases crystallization increases and viscosity increases. It is not uncommon that at room temperature (e.g., 18-25°C) the viscosity increases to the point that the composition becomes a solid. While 40°C and crystallization is discussed herein, the polyol crystallizable temperature may increase above 40°C for polyols with a higher melting point above 40°C e.g., 50°C. Regarding 75°C, exemplary viscosities for particular embodiments of the adhesive may be less than about 5,000 cP or less than about 4,000 cP. Further examples include less than 3,500 cP as well as less than 3,000 cP.

The adhesive may also have an NCO% of less than about 10%. Exemplary NCO% for the adhesive may comprises less than about 8%, less than about 7%, less than about 6% and no more than 5.5%.

One technique to determine the NCO% is ASTM D5155. Determining the NCO% is not necessarily limited to the aforementioned technique.

Another embodiment disclosed herein is a laminate comprising first and second substrates and a cured version of any one of the above adhesive compositions sandwiched between the first and second substrates. Optionally, either of the first or second substrates, or both, may comprise a porous substrate selected from the group of: paper, foil, woven fabric, non-woven fabric and combinations. An example of a non-woven fabric is a felt. The fabric may be a natural material, a synthetic material or combinations thereof. Non-woven PET can be an example of a non-woven synthetic material.

In a further optionally embodiment at least one of the first and the second substrate does not comprise PET or bi-axially oriented polypropylene ("BOPP").

An embodiment of the above SFLA composition is illustrated in Figure 2, designated 20. As shown in Figure 2, the embodiment includes film 22 (film 22 may generically be referred to as a substrate), which may or may not have an ink coating on it. Film 22 may function as a label. The embodiment further includes a substrate 26. In one embodiment the substrate may be a porous substrate. Alternatively, both film 22 and substrate 26 may be porous substrates. Figure 2 further includes an adhesive represented by dots 24. As shown, adhesive 24 only nominally wicks into substrate 26.

Another illustration of how the disclosed SFLA differs from prior art is shown in Figure 3. Figure 3 illustrates the bleed through of an embodiment disclosed herein (left side) vs. the prior art (right side). As can be seen the embodiment disclosed herein exhibits minimal bleed through. In contrast the prior art exhibits significant bleed through. A person of skill in the art will quickly recognize how the prior art will obscure the ability to view an ink coating on the substrate.

The adhesive compositions and their applications according to the present disclosure may be prepared and used according to the examples set out below. These examples are presented herein for purposes of illustration of the present disclosure and are not intended to be limiting, for example, the preparations of the compositions and their applications.

### EXAMPLES

### Example 1

About 89g of Stepanpol PC2072P-30 (Aliphatic polyester polyol from hexanediol and dodecanedioic acid, having an OH number 30 mg KOH/g) was crushed into small pieces and added to 1L glass reactor. About 167g of polypropylene glycol (MW 2000) was added and temperature was increased to 90°C to melt/dissolve crystalline polyester polyol and mix with polypropylene glycol. Once a clear mixture is formed, about 143g of Mondur MA2300 (Allophanate modified 4,4'-MDI, 23 NCO%) was added to the mixture at 90°C with stirring. After 1 hour reaction at 90°C, a final isocyanated polymer was obtained at 5.9 NCO%.

### Example 2

About 74g of Stepanpol PC205P-30 (Aliphatic polyester polyol from hexanediol and adipic acid, OH number 30 mg KOH/g) was crushed into small pieces and added to 1L glass reactor. About 179g of polypropylene glycol (MW 2000) was added to the reactor and temperature was increased to 90°C to melt/dissolve crystalline polyester polyol and mix with polypropylene glycol. Once a clear mixture is formed, about 146g of Mondur PF (Urethane modified 4,4'-MDI, 23 NCO%) was added to the mixture at 90°C with stirring. After 1 hour reaction at 90°C, final polymer was obtained at 6.0 NCO%.

### Example 3

### Intermediate A

About 234g of Polypropylene glycol (MW 2000) and about 140g of Mondur MA2300 (Allophanate modified 4,4'-MDI) were added to 1L glass reactor. Temperature was increased to 70°C and reacted for 1 hour. After 1 hour reaction at 70°C, final polymer was obtained at 6.0 NCO%.

### Intermediate B

About 143g of Stepanpol PC-205P-30 was added to the 1L glass reactor and temperature was increased to 90°C to melt polyester polyol. About 45g of Mondur MLQ (mixture of 4,4'-MDI and 2,4'-MDI, 33.5 NCO%) was added to glass reactor. After 1 hour reaction at 90°C, final prepolymer was obtained at 6.33 NCO%.

### Final prepolymer

Intermediate A and intermediate B were mixed together to make final polymer at 6.1 NCO%.

### Example 4

About 100g of Foral 85E (ester of hydrogenated rosin tackifier, softening point 84°C) was added to about 900g of prepolymer from Example 2 and final polymer was obtained at 5.4 NCO%.

### Example 5

About 100g of Foral 85E (ester of hydrogenated rosin tackifier, softening point 84°C) was added to about 900g of prepolymer from Example 3 and final polymer was obtained at 5.5 NCO%.

Adhesives were heated to 75°C and applied to polyethylene (PE) film for paper/PE structure and applied to Vinyl for Vinyl/non-woven PET laminate structure. Coat weight was around 3 Ib/ream for paper/PE laminate structure and around 10 Ib/ream for Vinyl/non-woven PET laminate structure. The laminated rolls were kept at room temperature and inspected after 7 days for adhesive wicking, blocking and pulling test.

**Table 1**

| | Example 1 | Example 2 | Example 3 | Example 4 | Example 5 | Benchmark |
|---|---|---|---|---|---|---|
| NCO% | 5.9% | 6.0% | 6.1% | 5.4% | 5.5% | - |
| Appearance at 25°C | Solid | solid | solid | solid | solid | Viscous liquid |
| Viscosity at 60°C (cP) | 5175 | 5250 | 3090 | 6615 | 4425 | 9300 |
| Viscosity at 75°C (cP) | 2550 | 2475 | 1425 | 2715 | 1875 | 3525 |
| Substrate wicking (Paper/PE for flexible packaging) | No | No | No | No | No | Yes |
| Blocking (Paper/PE) | No | No | No | No | No | Yes |

| Failure mode from peel test (Paper/PE) | Paper fiber tear | Paper fiber tear | Paper fiber tear | Paper fiber tear | Paper fiber tear | Paper surface tear (adhesive failure) |
|---|---|---|---|---|---|---|
| Lamination for wallcovering (10mil Vinyl/5mil non-woven PET) | Fail | Fail | Fail | Pass | Pass | Fail |

The data in Table 1 demonstrates that the laminating adhesives made with the crystallizable polyester polyol provided crystallinity to the final adhesives and thereby made them solid at room temperature. When these adhesives were used to laminate paper and polyethylene film for flexible packaging application, there were no adhesive wicking observed and thereby no blocking of the wound rolls were observed, while benchmark adhesive (not made with a crystallizable polyol) showed paper wicking and thereby blocking of the wound roll. All the adhesives in this invention showed favorable paper fiber tear during manually pulling the laminates apart, while the laminate structure from the benchmark adhesive showed adhesive failure during pulling. When much thicker substrates, 10mil Vinyl and 5mil non-woven PET for wallcovering application, were used, it was found that the strength of the adhesives is further increased by adding a tackifier having a softening point of at least about 40°C (84°C in the particular embodiment) which is evidenced by the lamination of them using Nordmeccanica Combi 3000 production laminator. It was not possible to laminate 10mil Vinyl and 5mil non-woven PET using the Nordmeccanica laminator due to the stiffness of the thick substrate and low green strength of the adhesives. However, the lamination performance was improved with the added tackifier and it was able to laminate 10mil Vinyl and 5mil non-woven PET substrates with the adhesives from Example 4 and Example 5 using Nordmeccanica Combi 3000 laminator without problems.

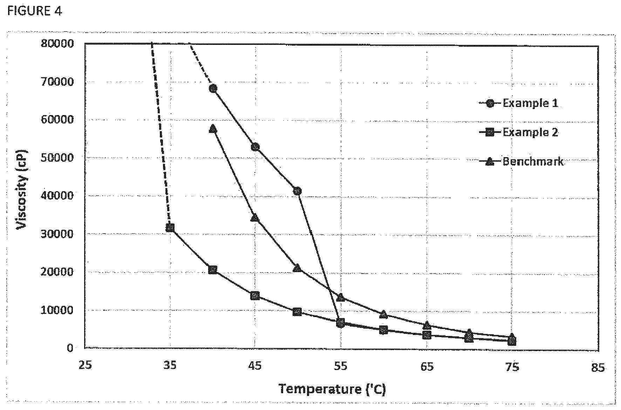

The results shown in Figure 4 are a graphical representation of Figures 1 and 2. Figure 1 is a schematic view of the benchmark (control) of Figure 4. Examples 1 and 2 in Figure 4 represent Examples 1 and 2 from the Examples. Starting with the benchmark at higher temperatures it has a higher viscosity which led to higher coating temperatures and it was more difficult to clean up. In contrast both Examples 1 and 2 exhibited lower viscosity than the benchmark which led to easier coating and clean-up as well as lower application temperatures.

At lower temperatures the benchmark did not crystallize. It was still a viscous liquid at room temperature, being a strong indicator of the drawbacks cited above regarding the prior art. Too much of the adhesive penetrated into the paper substrate causing ink damage and blocking. In contrast both Examples 1 and 2 crystallized at room temperature or above. Undesirable penetration into the paper substrate did not occur and no ink damage was observed. In particular example 1 crystallized at or about 40°C and Example 2 crystallized at or about 35°C.

While this invention has been described in detail with reference to certain preferred embodiments, it should be appreciated that the present disclosure is not limited to those precise embodiments. Rather, in view of the present disclosure, many modifications and variations would present themselves to those skilled in the art without departing from the scope and spirit of this invention.

## Claims

1. A moisture cure solvent free laminating adhesive composition comprising a reaction product of precursors, the precursors comprise:
a. a crystallizable polyol having:
i. (1) a melting point of at least about 30°C; and
ii. (2) a OH number of at least about 10 mg KOH/ g
b. less than 10 wt% of a tackifier having a melting point or softening point of at least about 40°C, preferably at least about 50°C, more preferably at least about 65°C and even more preferred no more than about 100°C;
wherein a viscosity of the adhesive comprises at least one of:
1. less than about 10,000 cP at 60°C,
2. less than about 5,000 cP, preferably less than about 4000 cP, at 75°C and
3. combinations thereof.

2. The moisture cure adhesive composition of claim 1 wherein the precursors further comprise a non-crystallizable polyol having a number average molecular weight of at least about 400 Daltons.

3. The moisture cure adhesive composition of claim 2 wherein the number average molecular weight comprises no more than about 10,000 Daltons.

4. The moisture cure adhesive of anyone of claims 2 or 3 wherein the non-crystallizable polyol comprises at least one of a polyether polyol, polyester polyol, co-polyester polyol and combinations thereof.

5. The moisture cure adhesive of anyone of the preceding claims wherein the crystallizable polyol comprises a polyester polyol.

6. The moisture cure adhesive of anyone of the preceding claims wherein the precursors further comprise an isocyanate containing compound.

7. The moisture cure adhesive of claim 6 wherein the isocyanate containing compound comprises a 4, 4' MDI compound.

8. The moisture cure adhesive of claim 7 wherein the 4, 4' MDI compound comprises at least one of allophanate MDI, uretonimine, polymeric MDI and combinations thereof.

9. The moisture cure adhesive of either of claim 7 or 8 wherein the isocyanate containing compound further comprises an aliphatic isocyanate, such as but not limited to HDI, HDI trimer or IPDI.

10. The moisture cure adhesive of anyone of claims 1-5 wherein the precursors further comprise an isocyanate containing compound selected from: hexamethylene diisocyanate, toluene diisocyanate (TDI), diphenylmethane diisocyanate (MDI), m- and p-phenylene diisocyanates, bitolylene diisocyanate, cyclohexane diisocyanate (CHDI), bis-(isocyanatomethyl)cyclohexane (H6XDI), dicyclohexylmethane diisocyanate (H12MDI), dimer acid diisocyanate (DDI), trimethyl hexamethylene diisocyanate, lysine diisocyanate and its methyl ester, isophorone diisocyanate, methyl cyclohexane diisocyanate, 1,5-napthalene diisocyanate, xylene diisocyanate and methyl derivatives thereof, polymethylene polyphenyl isocyanates, chlorophenylene-2,4-diisocyanate, polyphenylene diisocyanates, isophorone diisocyanate (IPDI), hydrogenated methylene diphenyl isocyanate (HMDI), tetramethyl xylene diisocyanate (TMXDI), hexamethylene diisocyanate (HDI), trimer of IPDI, trimer of HDI, a biuret of HDI, and combinations thereof.

11. The moisture cure adhesive of anyone of the preceding claims wherein an NCO% of the adhesive comprises less than about 10%.

12. The moisture cure adhesive of anyone of the preceding claims wherein the composition comprises no more than a nominal amount of the tackifier.

13. A laminate comprising first and second substrates and a cured version of the adhesive composition of anyone of the preceding claims sandwiched between the first and second substrates.

14. The laminate of claim 13 wherein at least one of the first and second substrates comprises a porous substrate selected from the group of: paper, foil, woven fabric, non-woven fabric and combinations thereof.

15. The laminate of either claims 13 or 14 wherein at least one of the first and second substrates does not comprise polyethylene terephthalate (PET) or bi-axially oriented polypropylene (BOPP).
